# EUROPEAN PATENT APPLICATION

(11) **EP 4 818 382 A1**
(43) Date of publication of application: **07.10.2026**
(21) Application number: 24898152.4
(22) Date of filing: 28.11.2024
(51) Int. Cl.: D02G 3/48, B60C 9/00, D02G 3/04

(54) **HYBRID CORD AND METHOD FOR MANUFACTURING HYBRID CORD**

(30) Priority: 29.11.2023 KR 20230169947
(71) Applicant: HANKOOK TIRE & TECHNOLOGY CO., LTD, Gyeonggi-do 13494 (KR)
(72) Inventor: LEE, Ji Wan, Daejeon 34127 (KR); KO, Kil Ju, Daejeon 34127 (KR); LEE, Mi Jung, Daejeon 34127 (KR); PARK, Seung Ha, Daejeon 34127 (KR); JUNG, Kwan Woo, Daejeon 34127 (KR); LEE, Jong Min, Daejeon 34127 (KR)
(74) Representative: Stöckeler, Ferdinand
(86) International application number: PCT/KR2024/019119
(87) International publication number: WO 2025/116558

(57) **Abstract**

An embodiment of the present disclosure provides a method for manufacturing a hybrid cord, including preparing a high-strength fiber and a thermoplastic fiber; manufacturing a greige cord by cabling the high-strength fiber and the thermoplastic fiber with a direct cabler; and manufacturing a dip cord by heat-treating the greige cord, wherein the high-strength fiber has a yarn strength of 15 g/d or more and an elongation at break of less than 10%, and the thermoplastic fiber has a yarn strength of 5 g/d to 10 g/d, a melting temperature of 220 °C or higher, and an elongation at break of 12% or more.

## Description

### TECHNICAL FIELD

The present disclosure relates to a method for manufacturing a hybrid cap ply reinforcement differently applying a modulus ratio for each section of a hybrid cap ply reinforcement of a high-modulus and low-modulus fiber and reflecting characteristic manufacturing conditions and physical property conditions, and more particularly, to a high-performance pneumatic radial tire applying the hybrid cap ply reinforcement, having improved uniformity, and being efficient.

### BACKGROUND ART

Until now, the aramid hybrid cap ply reinforcement used as a reinforcing belt in high-performance tires has been applied by typically featuring the ratio of the initial modulus to the modulus at break.

As prior patents related to the aramid hybrid described above, Sumitomo Rubber Japanese Patent Application Publication No. 01-247204 and Michelin US Patent No. 7,222,481 are representative, and both typically define an initial modulus and a final modulus.

Theoretically, the initial modulus is defined as a slope of a tangent line when a strain is 0 on a stress-strain curve. However, a problem occurs in which a very low slope is obtained when drawing a tangent line at the origin in a measurement graph of an actual tire cap ply reinforcement (hereinafter referred to as a "cord"), and in order to prevent this, a specific section needs to be set and a tangent (tan α) slope value needs to be obtained, but the literature does not mention the section for this.

In fact, under an initial load condition of 0.5 cN/tex or 0.05 g/d during a general tensile test, it is not clear whether the slope of the tangent line at a strain of 0 substantially accurately represents the initial modulus value, and in the conventional initial load condition or minute displacement section, structural deformation improving a cohesive force of filaments occurs without evenly distributing stress due to a structural characteristic of the cohesive force of a fiber bundle constituting the cord becoming insufficient below a certain load, and thus it seems there are many insufficient parts to define the initial modulus of a material under the initial load condition during the tensile test.

Due to this phenomenon, a phenomenon occurs where the modulus in an initial minute section has a lower value than an originally desired characteristic value, and in fact, performing a tensile test under an initial load condition of 0.05 g/d with only an aramid cord, and then obtaining the slope of the tangent line at an origin, that is, the initial modulus, in a minute section at the origin, an undesired result of a ratio to the final modulus being 1:10 in some cases may appear.

In order to solve this error, in the present disclosure, the tensile test is performed by applying an initial load twice that of the conventional one, and the initial modulus is defined by the tangent line at a strain of 0. By defining the initial load as 0.10 g/d, the initial modulus representing overall material characteristics is defined.

Furthermore, the aramid hybrid cord manufacturing technology of Michelin is applied to a tire by cabling and heat-treating such that a ratio of an initial modulus to a final modulus is 10 or more.

Specifically, using an aramid fiber bundle of 900 to 2,000 denier and a polyamide 66 fiber bundle of 700 to 1,500 denier by cabling each at a level of 1 to 2 plies is general, and by imparting different Z-twists to an aramid yarn and a polyamide 66 yarn, a polyamide 66 yarn is structurally configured as a core and the aramid yarn is configured in a covering form. At this time, manufacturing nylon as a core and aramid as a covering requires manufacturing by relatively imparting more twist of a Z-twist of aramid compared to nylon, or even imparting the twist of nylon in an opposite direction to aramid.

The above-described method has a disadvantage of being difficult to manufacture using a direct cabler (Direct Cabler) method, and using a ring twister prolongs the manufacturing time, causing large process loss, and maintaining a core-covering structure configured during the cabling process requires greatly lowering tension during subsequent dipping (Dipping) and heat treatment.

In an aramid-polyamide 66 hybrid cord obtained by this method, a ratio of an initial modulus to a final modulus at break becomes 10 or more, and at this time, one inflection point due to an occurrence of a difference between the initial modulus and the final modulus exists at a tensile strain of 0.01 to 0.07.

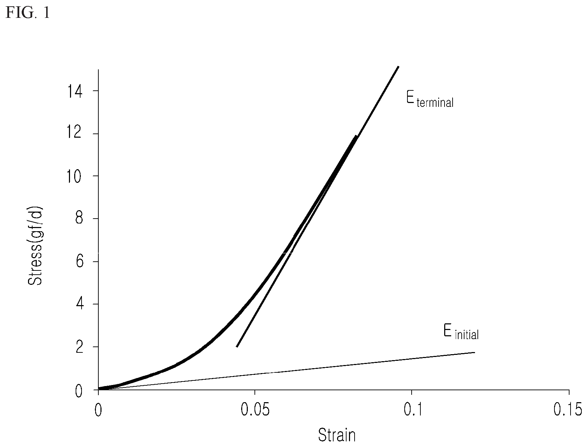

FIG. 1 illustrates a stress-strain curve of an aramid-polyamide 66 hybrid cord manufactured by the above-described method.

Referring to FIG. 1, an initial modulus (Eᵢₙᵢₜᵢₐₗ) is 14 gf/d, and a final modulus (Eₜₑᵣₘᵢₙₐₗ) is 257 gf/d, and a ratio of the initial modulus to the final modulus is 18.3. However, since a material of fibers such as a textile cord is not in a fully solid state but is an aggregate of thin fibers, very large errors may occur during measurement, making it insufficient to limit physical properties simply by the ratio of the initial modulus to the final modulus.

Furthermore, in the aramid-polyamide 66 hybrid cord, an excessively low initial modulus has a disadvantage of causing deviations between products in a subsequent process including a rolling process, and artificially lowering a tension during a heat treatment process of a cord in order to have a low initial modulus causes a problem of a deviation in physical properties of each cord becoming large.

An early part of the stress-strain curve has a disadvantage of an initial modulus being relatively too low compared to process conditions for ease of manufacturing, easily deforming when receiving a tensile force in an axial direction of a cord during a process, making dimensional stability during a manufacturing process disadvantageous, and a difference in physical properties between cords generated during a cord manufacturing process also has a disadvantage of affecting uniformity and dimensions in a finished tire.

Meanwhile, Korean Patent Registration No. 10-1580352 features an identical Z-twist twist of aramid and nylon in a hybrid of aramid and nylon. However, if the twist is measured by the test methods corresponding to ASTM D885 and ASTM D1423, then even if the same number of turns is reflected during manufacturing, the number of twists changes depending on a length change of nylon during heat treatment.

That is, having an identical twist measurement value based on a dip cord for aramid and nylon of a Z-twist is very difficult, and the meaning of having the same number of twists is also ambiguous to be limited numerically.

In the ASTM D1423 test method, the following Equation 1 is reflected for both S-twist and Z-twist: $T = \frac{R}{L}$ Equation 1

In the above equation, T means the number of twists, R means the number of twist rotations in a measuring device, L means an initial length during measurement before untwisting.

In the case of an aramid hybrid, manufacturing a hybrid cord through weaving and heat treatment after twisting the same length of yarn using a direct cabler may cause the following error.

When inputting, the identical length and the number of rotations are input for both aramid and nylon, so that after untwisting of the S-twist, the number of turns of the Z-twist becomes identical, but after actually untwisting the S-twist, the initial lengths of each aramid and nylon during Z-twist measurement change to be different.

Aramid does not undergo thermal shrinkage, but nylon undergoes thermal shrinkage, and thus during actual measurement, an L value of nylon has a shorter value, and if the L value is measured according to the above-described ASTM D1423, then a phenomenon of the number of twists of nylon appearing higher may occur. Conversely, providing an excessive tension during heat treatment so that aramid goes to a core and nylon covers to the outside conversely increases an L value of nylon, and thus a phenomenon of the number of twists appearing small may occur.

Since these characteristics are well-known facts occurring while setting physical properties of a final dip fabric, determining limitation to improving performance of a tire or improving manufacturability is difficult.

Furthermore, Korean Patent Registration No. 10-1353700 discloses a difference between an elongation at break of aramid having a high modulus during a tensile break of a manufactured hybrid cord and an elongation at break of subsequent nylon being within 3%, and Korean Patent Registration No. 10-1602605 discloses making input lengths different during simultaneous cabling of aramid and nylon through a direct cabler and lengths being different also in a subsequently manufactured hybrid tire cord, but none of these may be said to be a unique manufacturing process developed for improving tire performance.

A method for manufacturing a hybrid cord securing stable physical properties of an aramid hybrid, being efficient, and having improved uniformity when applied to a radial tire is required.
Prior Art Documents Korean Patent Registration No. 10-0668633

### Detailed Description of the Invention

### Technical Problem

In order to solve the above problems, an aspect of the present disclosure provides a method for manufacturing a hybrid cord, including preparing a high-strength fiber and a thermoplastic fiber; manufacturing a greige cord by cabling the high-strength fiber and the thermoplastic fiber with a direct cabler; and manufacturing a dip cord by heat-treating the greige cord, wherein the high-strength fiber has a yarn strength of 15 g/d or more and an elongation at break of less than 10%, and the thermoplastic fiber has a yarn strength of 5 g/d to 10 g/d, a melting temperature of 220 °C or higher, and an elongation at break of 12% or more.

Furthermore, an aspect of the present disclosure provides a hybrid cap ply reinforcement manufactured by the method for manufacturing a hybrid cord.

Furthermore, an aspect of the present disclosure provides a pneumatic radial tire including the hybrid cord.

The technical problems to be achieved by the present disclosure are not limited to the technical problems mentioned above, and other technical problems not mentioned will be clearly understood by those skilled in the art to which the present disclosure pertains from the following description.

### Technical Solution

An aspect of the present disclosure provides a hybrid cord including a thermoplastic fiber disposed in a core and having a yarn strength of 5 g/d to 10 g/d and an elongation at break of 12% or more; and a high-strength fiber covering the thermoplastic fiber and having a yarn strength of 15 g/d or more and an elongation at break of less than 10%.

In an embodiment of the present disclosure, the high-strength fiber may include at least one of PPTA, a wholly aromatic polyester, and PPTA/DPE.

In an embodiment of the present disclosure, the thermoplastic fiber may include at least one of polyamide and polyester.

In an embodiment of the present disclosure, a density ratio of the thermoplastic fiber to the high-strength fiber may be 1: 0.78 to 1 : 0.96.

In an embodiment of the present disclosure, a draw ratio of the thermoplastic fiber may be 5.4 to 5.8.

In an embodiment of the present disclosure, the hybrid cord may have a strength of 11 g/d or more, an S-twist having 250 to 500 TPM, and a twist multiplier(α_{d}) represented by the following Equation 2 of 140 to 210. ${α}_{d} = \frac{T}{100} \sqrt{{ρ}_{d}}$ Equation 2

In the above formula, the symbol α*_{d}* is a denier-based twist multiplier, T is TPM, and the other symbol ρ*_{d}* is a linear density of the hybrid cord in units of denier

In an embodiment of the present disclosure, a modulus transition point exists at a strain of 0.01 to 0.03, the modulus in a region before the modulus transition point is 30 to 70 g/d, and the modulus in a region after the modulus transition point reaches a saturation region at a level of 150 to 250 g/d.

An aspect of the present disclosure provides a pneumatic radial tire including the hybrid cord.

An aspect of the present disclosure includes preparing the high-strength fiber and the thermoplastic fiber; manufacturing a greige cord by cabling the high-strength fiber and the thermoplastic fiber with a direct cabler; and manufacturing a dip cord by heat-treating the greige cord.

In an embodiment of the present disclosure, in manufacturing the greige cord, the high-strength fiber may be input at an input length of 0.99 to 1.015 relative to the thermoplastic fiber.

In an embodiment of the present disclosure, in manufacturing the greige cord, the high-strength fiber may be disposed on a pot yarn of the direct cabler, and the thermoplastic fiber may be disposed on a creel yarn of the direct cabler.

In an embodiment of the present disclosure, a thermal shrinkage rate of the greige cord may be 2.5 to 6%.

In an embodiment of the present disclosure, manufacturing a dip cord by heat-treating the greige cord may be performed such that the dip cord shrinks by 0.5 to 3% compared to the greige cord.

### Advantageous Effects

The method for manufacturing a hybrid cord according to the present disclosure improves manufacturability of a hybrid cord and processability of a tire, thereby solving differences in tire performance including a physical property deviation, uniformity, and driving performance of the hybrid cord, improving the performance of a tire.

The effects of the present disclosure are not limited to the above-described effects, and should be understood to include all effects inferable from the detailed description of the present disclosure or the configuration of the disclosure described in the claims.

### BRIEF DESCRIPTION OF THE DRAWINGS

FIG. 1 is a stress-strain curve of a conventional aramid hybrid cord.
FIG. 2 is a flowchart of a method for manufacturing a hybrid cord of an embodiment of the present disclosure.
FIG. 3 is a stress-strain curve of a hybrid cord according to an embodiment of the present disclosure.
FIG. 4 is a stress-strain curve of a hybrid cord of an embodiment of the present disclosure.
FIG. 5 is a schematic cross-sectional view of a radial tire of an embodiment applying an eco-friendly hybrid cord of the present disclosure.

### Best Mode for Carrying Out the Invention

A most preferred embodiment of the present disclosure includes a thermoplastic fiber disposed in a core and having a yarn strength of 5 g/d to 10 g/d and an elongation at break of 12% or more; and a high-strength fiber covering the thermoplastic fiber and having a yarn strength of 15 g/d or more and an elongation at break of less than 10%.

### Mode for Carrying Out the Invention

Hereinafter, the present disclosure will be described with reference to the accompanying drawings. However, the present disclosure may be implemented in various different forms, and thus is not limited to the embodiments described herein. And, in order to clearly describe the present disclosure in the drawings, parts irrelevant to the description are omitted, and similar reference numerals are attached to similar parts throughout the specification.

Throughout the specification, connecting a part to another part includes not only directly connecting but also indirectly connecting with another member interposed therebetween. In addition, if a certain part includes a certain component, then this means that other components may be further included rather than excluding other components, unless specifically stated to the contrary.

The terms used herein are used to describe specific embodiments, and are not intended to limit the present disclosure. A singular expression includes a plural expression unless the context clearly dictates otherwise. In the present specification, terms including include or have are intended to designate the presence of features, numbers, operations, actions, components, parts, or combinations thereof described in the specification, and it should be understood that the presence or addition possibility of one or more other features or numbers, operations, actions, components, parts, or combinations thereof is not excluded in advance.

As used herein, the term hybrid cord means a composite cord including two or more types of materials having different characteristics.

As used herein, the term core yarn refers to a single yarn positioned at a core of a hybrid cord. As used herein, the term covering yarn refers to 1 strand or multiple strands of yarn wound around the core yarn.

As used herein, twisting a yarn or filament in a counterclockwise direction is referred to as Z-twist, and twisting a yarn or filament in a clockwise direction is referred to as S-twist.

As used herein, a single yarn manufactured by Z-twisting a filament is referred to as a Z-twisted yarn, and a cabled yarn refers to a yarn made by twisting together two or more single yarns in either direction.

As used herein, the initial modulus of the hybrid cord shall mean a slope of a tangent line at an origin after applying an initial load.

As used herein, the intermediate modulus of the hybrid cord shall mean a modulus at a point on a stress-strain curve of the hybrid cord where a tangent slope decreases relative to an initial modulus region and then starts to increase.

As used herein, the final modulus of the hybrid cord shall mean a tangent slope on a stress-strain curve of the hybrid cord coinciding with an elongation corresponding to break of the cord.

Hereinafter, embodiments of the present disclosure will be described in detail with reference to the accompanying drawings.

Maintaining an initial modulus very low in order to have a large ratio of an initial modulus to a final modulus in a conventional aramid-polyamide 66 hybrid cord causes a problem in cord manufacturing, thereby causing a problem of increasing a manufacturing cost.

For example, configuring a structure of a polyamide 66 yarn positioned in a core and an aramid yarn covering generally manufactures an aramid-polyamide 66 cord having a core-covering structure by inducing self-shrinkage of polyamide 66 by inputting each ply with different numbers of twists (Z-twist, Ply twist) in a twisting machine and eliminating almost all tension during a heat treatment process after dipping, and proceeding without tension in an overall process causes a disadvantage requiring a very slow process speed to be maintained, and a deviation in physical properties including intermediate elongation for each cord strand becomes large.

Furthermore, a very low initial modulus makes maintaining uniform physical properties in a rolling process and a cutting/molding process of applying a tensile force during a tire manufacturing process difficult, thereby ultimately adversely affecting a physical property uniformity of a tire.

Furthermore, a method of using an ordinary polyamide 66 yarn and a para-aramid by cabling with a direct cabler is also widely used to easily and efficiently manufacture a para-aramid-polyamide 66 hybrid cord, but in this case, a disadvantage of an initial modulus of an S-S curve becoming excessively high may exist.

Particularly, in a dip cord manufactured through heat treatment after weaving by twisting a hybrid cord using a direct cabler, manufacturing the number of twists of each aramid and nylon 66 ply to be identical in a Z-twist by untwisting an S-twist does not implement a complete core-covering structure between nylon and aramid, and provides an equivalent twist path. In this case, initial and mid-stage moduli become excessively high, presenting a disadvantage requiring raising a belt lift ratio expanding a circumference of a belt portion during a vulcanization process of tire manufacturing very restrictively. A belt lift ratio exceeding a level of 2% may make a probability of a non-conformity occurring much higher.

Having a stable belt lift ratio (generally a level of 2.5 to 4%, 0.025 to 0.04 based on strain) identical to tires using general nylon cap plies requires maintaining a low modulus up to a minimum of 3%.

As described above, identical numbers of twists of Z-twists of aramid and nylon 66 applies an excessive tension at a low elongation, leaving room for a non-conformity to occur during tire manufacturing.

Therefore, determining by dividing a strain range of 0.01 to 0.02, a range of 0.02 to 0.04, and a strain range thereafter of the hybrid cord is preferable, and a non-linear approach may be taken. Furthermore, the above-described prior arts fail to specify manufacturing conditions for a nylon yarn and application conditions in a direct cabler.

In order to solve the above-described problems, an aspect of the present disclosure provides a method for manufacturing a hybrid cord.

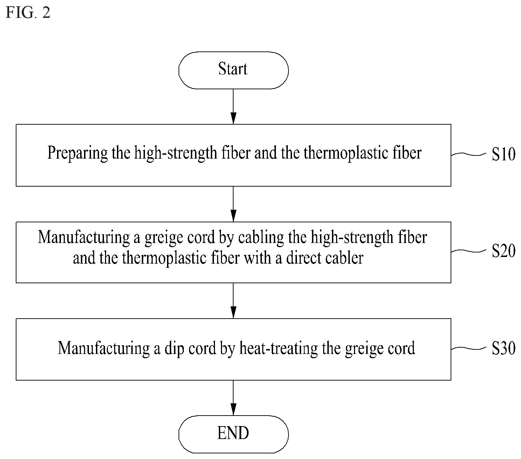

FIG. 2 is a flowchart of a method for manufacturing a hybrid cord of an embodiment of the present disclosure.

Referring to FIG. 2, the method for manufacturing a hybrid cord of an embodiment of the present disclosure includes preparing a high-strength fiber and a thermoplastic fiber (S10); manufacturing a greige cord by cabling the high-strength fiber and the thermoplastic fiber with a direct cabler (S20); and manufacturing a dip cord by heat-treating the greige cord (S30).

Furthermore, the high-strength fiber may have a yarn strength of 15 g/d or more and an elongation at break of less than 10%, and the thermoplastic fiber may have a yarn strength of 5 g/d to 10 g/d, a melting temperature of 220 °C or higher, and an elongation at break of 12% or more.

In an embodiment of the present disclosure, the high-strength fiber may be a high-strength super fiber such as para-aramid (trade names Kevlar, Twaron, Heracron, Alkex, etc.), DPE/PPTA (trade name Technora), or wholly aromatic liquid crystal polyester (trade name Vectran, etc.), and the thermoplastic fiber may be polyamide (nylon 66, nylon 6, nylon 56, nylon 46, nylon 410) or polyester (polyethylene terephthalate, polytrimethylene terephthalate, polybutylene terephthalate, polyethylene furanoate, etc.).

In an embodiment of the present disclosure, the high-strength fiber may be a high-strength super fiber including para-aramid, DPE/PPTA, or a wholly aromatic liquid crystal polyester, and the thermoplastic fiber may be polyamide or polyester.

In an embodiment of the present disclosure, the high-strength fiber may be a para-aramid, for example, poly p-phenyleneterephthalamide (PPTA) having a characteristic of exhibiting liquid crystallinity at a specific concentration of a solution dissolved in concentrated sulfuric acid and obtainable through air-gap wet spinning.

In an embodiment of the present disclosure, the high-strength fiber may be DPE/PPTA (Co-poly 3,4'-diphenylether/para-phenylene therephtalate), which is one of aromatic polyamides having a characteristic of exhibiting isotropy rather than liquid crystallinity when dissolved in a solvent, and developing its microstructure by drawing it 10 times or more during a heat treatment process after air-gap wet spinning.

In an embodiment of the present disclosure, the high-strength fiber may be a wholly aromatic polyester, which is a high-strength fiber having thermotropic liquid crystal characteristics and obtained through melt spinning.

In an embodiment of the present disclosure, the thermoplastic fiber being an aliphatic polyamide series or a semi-aromatic polyester may be preferable.

The above-described materials may undergo hybridization for their respective roles in a tire.

In passenger and light truck tires, using a material having a high modulus on a steel belt is preferable for a purpose of suppressing a change in driving stability due to a change in a contact patch and an increase in ground clearance caused by an increase in a circumference of a tire tread by a centrifugal force during high-speed driving while driving.

However, a current tire manufacturing process smoothly manufactures a tire preferably if a circumference or diameter of a green tire is smaller than a circumference or diameter of a mold, and thus problems exist in that tire manufacturing is impossible if a high-strength and high-modulus material including para-aramid is solely used as a cap ply.

In order to solve these problems, generally manufacturing a hybrid cord in a two-operation process using a ring twister was common in the past, but in this case, problems exist of physical properties of the hybrid cord becoming non-uniform, an initial modulus becoming excessively low, characteristics of a high-strength material including aramid being difficult to be expressed even under a design condition having a belt lift ratio of about 4%, and a manufacturing process becoming complicated.

Methods improving these disadvantages also have unrealistic differences showing values different from an actual hybrid cord intended to be used.

Furthermore, disclosing a hybrid cord prepared making a high-strength and high-modulus fiber ply break first in a load-elongation curve resulting from a tensile test of the manufactured hybrid cord, and a thermoplastic fiber ply break within 3% from a corresponding point is already an area sufficiently achievable even with an existing technology, and using an aramid hybrid cord in a cap ply of a tire already loses an original function at a time point of a high-strength high-elastic fiber ply breaking, failing to be viewed as a necessary condition for achieving performance of a high-performance tire in association with tire performance. For example, cabling thermoplastic fibers may very effectively express an elongation at break of a corresponding thermoplastic fiber to break together with a high-strength fiber, or break first by a core-covering structure, and conversely, a corresponding thermoplastic fiber having a characteristic of a very high elongation at break may make a break of a thermoplastic fiber occur 3% after a break of a high-strength high-modulus fiber occurs, but this being a matter related to a safety factor already out of a performance range of a tire makes association with performance difficult.

The present disclosure intends to improve a method of hybridizing a high-strength high-modulus fiber material and general-purpose thermoplastic fibers including nylon and polyester to improve the above-described points and to be an effective method in actual tires.

In an embodiment of the present disclosure, the high-strength fiber may be 800 to 2,000 denier, and the thermoplastic fiber may be 800 to 2,000 denier, and a draw ratio of the thermoplastic fiber is 5.4 to 5.8.

In an embodiment of the present disclosure, the high-strength fiber being an aramid fiber and the thermoplastic fiber being nylon 66 makes a density of the aramid fiber 1.40 and a density of nylon 66 1.15, and nylon corresponding to a thickness identical to aramid 1500 denier is 1260 denier.

From this point of view, matching a cross-sectional area of a high-strength high-modulus fiber represented by aramid and a thickness of a thermoplastic fiber represented by nylon 66 1:1 prepares the materials.

Using materials having actual thicknesses similar to each other within an extent of 95% is preferable, and in this case, twisting may proceed smoothly in a direct cabler.

In the case of an aramid fiber, physical properties of already commercialized products are defined, so using a product relatively advantageous for fatigue, such as Dupont's Kevlar 29 AP, is preferable.

Furthermore, in the case of nylon 66 to be used as a thermoplastic fiber, obtaining different physical properties through a spinning process is general. Generally, a draw ratio of nylon 66 for a tire cord is set at a standard of 5.1 to 5.5, but in the present technology, a draw ratio of nylon 66 is set to 5.4 to 5.8, and thus a thermal shrinkage rate becomes larger compared to nylon 66 manufactured by a conventional method.

Due to this characteristic, a hybrid greige cord manufactured by a direct cabler shrinks more in a subsequent heat treatment process, and has an advantage of uniformly manufacturing nylon as a core and aramid as a covering form.

In an embodiment of the present disclosure, a thermal shrinkage rate of the greige cord may be 2.5% to 6%.

The thermal shrinkage rate of the greige cord being less than 2.5% makes a phenomenon of nylon structurally developing as a core and aramid as a covering during a heat treatment process difficult to appear, and the thermal shrinkage rate exceeding 6% makes a core-covering structure appear unevenly during a heat treatment process, causing non-uniformity in physical properties.

In an embodiment of the present disclosure, manufacturing a greige cord by cabling the high-strength fiber and the thermoplastic fiber with a direct cabler may be performed by disposing the high-strength fiber on a pot yarn of the direct cabler and disposing the thermoplastic fiber on a creel yarn of the direct cabler.

Mounting positions of bobbins of a high-strength fiber and a thermoplastic fiber are also very important in a direct cabler.

In an embodiment of the present disclosure, cabling may be performed by mounting aramid as a pot yarn and mounting nylon 66 at a position of a creel yarn.

A pot yarn position in a direct cabler has a characteristic of a twist being imparted while forming a large balloon. At this time, room for a length change of a pot yarn before meeting a creel yarn at a regulator to be cabled due to a centrifugal force when a balloon is generated makes applying aramid having a high modulus to a pot yarn preferable.

Furthermore, comparing a creel yarn and a pot yarn to examine an operation of imparting twist, a creel yarn is imparted with a twist while a lot of friction is applied from a regulator of a direct cabler, whereas a pot yarn is imparted with a twist while forming a balloon, and relatively little friction occurs. At this time, using aramid at a creel yarn position where friction occurs significantly may obtain a relatively non-uniform twist state, and therefore, aramid is attached to a pot yarn and nylon is attached to a creel yarn to be twisted.

In an embodiment of the present disclosure, manufacturing a greige cord by cabling the high-strength fiber and the thermoplastic fiber with a direct cabler may be performed by inputting the high-strength fiber at an input length of 0.99 to 1.015 relative to the thermoplastic fiber.

In an embodiment of the present disclosure, an input length of the high-strength fiber being less than 0.99 relative to the thermoplastic fiber has a disadvantage of making securing a configuration of a hybrid cord in a form of using a thermoplastic fiber as a core difficult, and an input length of a high-strength fiber being input in excess of 1.015 may make physical properties of a hybrid cord non-uniform.

Due to characteristics of a direct cabler, the number of turns of a pot yarn and a creel yarn may be imparted identically, but a practical difference in the number of twists in a Z-twist may occur due to a length change of a thermoplastic fiber in the number of twists after manufacturing a dip cord subsequently, making limiting the number of twists of a thermoplastic fiber and a high-strength fiber in a Z-twist in a manufacturing process and a hybrid greige cord before heat treatment meaningless, and furthermore, differently imparting the number of turns of a pot yarn and a creel yarn due to equipment limitations being also impossible puts no separate meaning on corresponding operations.

That is, twisting may be performed with a direct cabler by imparting an appropriate Z-direction twist to a high-strength and high-modulus fiber bundle including aramid having a tensile property close to a straight line and a very high initial modulus, and imparting an identical twist to a thermoplastic fiber including polyamide 66 having a low initial modulus.

The method for manufacturing a hybrid cord of an embodiment of the present disclosure includes manufacturing a dip cord (S30) by heat-treating the greige cord.

Manufacturing a dip cord (S30) may be performed after a weaving process of a greige cord, or may be manufactured as a single-end cord.

Therefore, in an embodiment of the present disclosure, a weaving operation before manufacturing a dip cord(S30) may be further included.

A dip system used in manufacturing a dip cord (S30) of the present disclosure is not limited as long as being obvious in the technical field of the present disclosure.

However, in general, in the case of a high-strength/high-modulus material including aramid, simply bonding with R.F.L (resorcinol formaldehyde latex) generally being not easy applies an epoxy primary dip using an epoxy such as various polyglycidyl ethers from Nagase and a caprolactam blocked diisocyanate such as IL-6 from Grilbond, and thereafter, mixing a novolac-based or resol-based RF resin and a latex prepared at a solid content ratio of 1:5, and generally uses a 2-dip method of secondarily applying and heat-treating an RFL aqueous solution having a basic characteristic of pH 9.0 to 11.

In an embodiment of the present disclosure, manufacturing a dip cord (S30) by heat-treating the greige cord may be performed such that heat treatment process conditions including 3 T (Tension, Time, Temp) are adjusted according to a heat treatment facility in a heat treatment process, resulting in shrinking by 0.5 to 3% compared to a greige cord of the hybrid cord.

Making a length of a dip cord 0.5 to 3% shorter than an input length during a heat treatment process is preferable, which, as described above, is intended to allow a thermoplastic fiber to shrink through heat treatment after heat treatment from a state of a core-covering structure not expressed at all in a greige cord state as a direct cabler is used by using a thermoplastic fiber having a slightly increased elongation at break, configuring a thermoplastic fiber as a core and configuring a high-strength fiber similarly to a covering form.

The hybrid cord of the present disclosure manufactured using the above-described method preferably considers a range of 250 to 500 TPM based on a dip cord, but considering a twist multiplier varying according to a linear density, a twist multiplier of an S-twist may be 140 to 210 according to the following Equation 2: ${α}_{d} = \frac{T}{100} \sqrt{{ρ}_{d}}$ Equation 2

In the above formula, the symbol is α*_{d}* a denier-based twist multiplier, T is TPM, and the other symbol ρ*_{d}* is a linear density of the hybrid cord in units of denier
The twist multiplier being less than 140 may accompany a decrease in strength and processability due to a lack of cord cohesive force, and further, during a heat treatment process expressing a thermoplastic fiber as a core and a high-strength fiber as a covering, structural non-uniformity may occur.

On the other hand, excessive twisting exceeding a twist multiplier of 210 interferes with an excessive cohesive property of fibers expressing a core-covering structure through a heat treatment process, and obtaining a low final modulus value insufficient for expressing a cord strength and a final modulus due to an excessive twist angle may make a strength utilization rate have disadvantageous characteristics.

In the case of a Z-twist, for example, in a direct cabler such as Allma CC4 from Saurer, twists of a pot yarn and a creel yarn not being greatly differentiated makes no difference in the total number of turns. However, in a heat treatment process, a length change of a thermoplastic fiber ply occurs due to heat setting after shrinkage or tension of a thermoplastic fiber constituting a hybrid cord occurs, and ultimately, measuring the number of twists based on a length before untwisting as in ASTM D885 and D1423 makes a high-strength fiber and a thermoplastic fiber constituting a Z-twist have different numbers of twists.

In the present disclosure, as described above, a thermoplastic fiber shrinks, and length shrinkage at a level of 0.5 to 3.0% exists in a dip cord compared to a hybrid greige cord, and regarding this, a range may be limited through a test method of ASTM D1423.

For example, a length after untwisting an S-twist and cutting off a nylon portion is reflected as an initial length of a Z-twist length measurement of aramid among a Z-twist, and a length of a remaining nylon 66 ply after cutting off aramid after untwisting an S-twist in another cord is reflected as an initial length of a nylon Z-twist, which may be calculated.

In the ASTM D1423 test method, the following Equation 1 is reflected for both S-twist and Z-twist: $T = \frac{R}{L}$ Equation 1

In the above equation, T means the number of twists, R means the number of twist rotations in a measuring device, L means an initial length during measurement before untwisting.

At this time, almost similar input lengths of nylon and aramid are input, but a length of nylon becomes shorter due to shrinkage of nylon, and consequently, as shown in Equation 1 by D1423, at identical number of turns (R in Equation 1), an initial length L becomes shorter in nylon than in aramid, and thus the number of twists of a Z-twist needs to have a larger value in nylon.

According to a test measurement method based on ASTM D1423, a dip cord needs to be manufactured such that the number of twists of a nylon ply has a value approximately 0.5 to 3.0% higher than the number of twists of an aramid ply.

Even applying the above-described manufacturing method, the number of twists of nylon 66 appearing lower than aramid or being less than a 0.5% difference makes an initial modulus of a dip cord too high, being disadvantageous to processability during tire manufacturing, and exceeding 3% suspects excessive shrinkage of nylon, and at this time, a section of physical properties of aramid being expressed becoming excessively long has an inefficient disadvantage in suppressing an increase in OD during high-speed driving when applied to a tire.

An aspect of the present disclosure provides a hybrid cord manufactured by the manufacturing method.

In an embodiment of the present disclosure, the hybrid cord has a strength of 11 g/denier or more relative to a linear density, a modulus transition point exists at a strain of 0.01 to 0.03, and in a secondary modulus being a slope of a tangent line of an S-S curve, a modulus of a modulus transition point in 1 region before a modulus transition point has a value of 30 to 70 g/d, and a modulus after a modulus transition point reaches a saturation region at a level of 150 to 250 g/d.

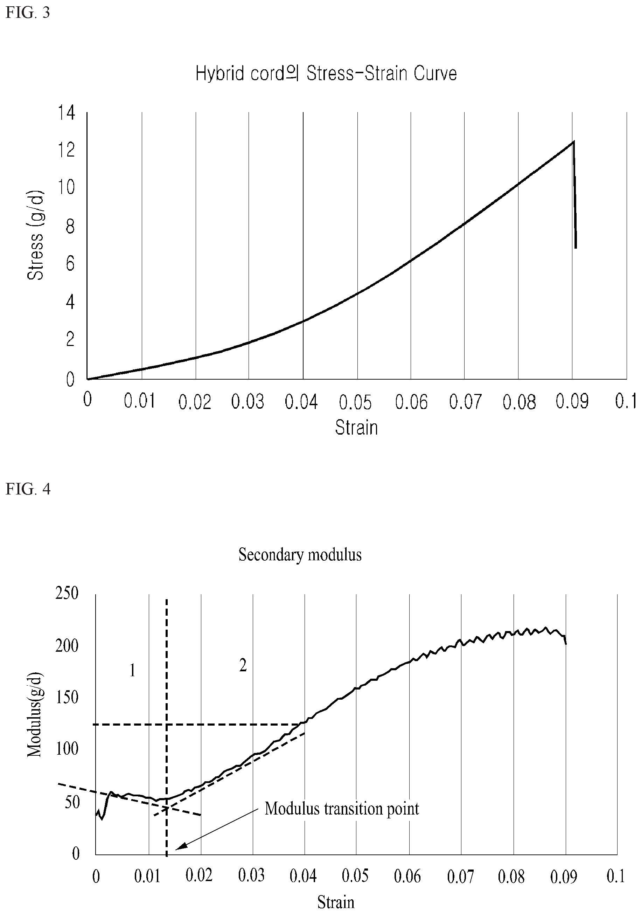

FIG. 3 is a stress-strain curve of a hybrid cord according to an embodiment of the present disclosure, and FIG. 4 is a stress-strain curve of a hybrid cord of an embodiment of the present disclosure.

Referring to FIG. 3 and FIG. 4, a modulus transition point may be confirmed.

In an embodiment of the present disclosure, a modulus transition point may exist between a strain of 0.01 to 0.03.

The transition point existing at 0.01 or less may have a disadvantage of a non-conformity of a shape of a tire collapsing in a vulcanization process going from a green tire to a vulcanized tire occurring when manufacturing a tire with an excessively high modulus. A hybrid cord without this section prevents inflation of a tire during vulcanization to make a defect, and thus may correspond to a very important part.

The transition point existing at a strain of 0.03 or more may have a disadvantage of being not effective in suppressing OD growth during high-speed driving, being an original purpose of an aramid hybrid cord, after manufacturing a tire.

Furthermore, at a strain of 0.04, a secondary modulus of at least 100 g/d or more needs to be secured. Having a value of less than 100 g/d at a strain of 0.04 may cause a disadvantage of an effect of suppressing OD growth during high-speed driving being insignificant.

Furthermore, as seen in region 2 of FIG. 4, a secondary modulus saturating at a level of 190 g/d or more is preferable. A maximum secondary modulus being less than 190 g/d may cause a disadvantage of an effect of suppressing an OD increase during high-speed driving being insignificant, and a problem of a break occurring at an impact of an irregular road surface may occur.

Here, a tensile test is based on D885, applying an initial load of 0.1 g/d, a crosshead speed proceeds at 300 mm/min, uses an S Clamp, and uses a grip having a grip face length of 50 to 70 mm, preventing a slip from occurring at a grip or a break from occurring at a grip.

An aspect of the present disclosure provides a pneumatic radial tire including the hybrid cord.

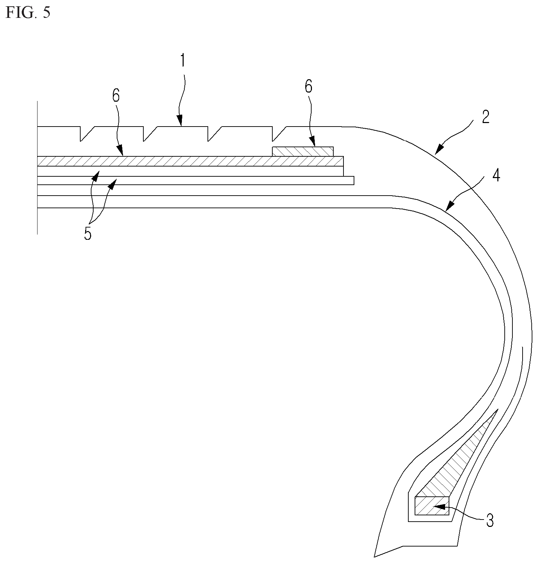

FIG. 5 is a schematic cross-sectional view of a pneumatic radial tire according to an embodiment of the present disclosure.

Referring to FIG. 5, the tire includes a tread portion 1, a sidewall portion 2, and a bead portion 3. A carcass layer 4 is installed between the pair of left and right bead portions 3, and both ends of the carcass layer 4 in a tire width direction are wound up from an inside to an outside of the tire around a bead portion 5, respectively.

A steel belt layer 5 and a belt layer 6 are installed outside the carcass layer 4, and an inner liner (not shown) is disposed inside the carcass layer 4.

The hybrid cord according to an embodiment of the present disclosure may be applied to the belt layer 6, and specifically, may be applied to a cap ply.

Hereinafter, embodiments of the present disclosure will be described in detail so that those skilled in the art to which the present disclosure pertains may easily perform them. However, the present disclosure may be implemented in various different forms and is not limited to the embodiments described herein.

### Examples

Comparative Example 1 and Comparative Example 2 respectively applied Polyamide 66 840D/2 28EPI and Aramid 1500D/2 21EPI, and Comparative Example 3 applied an Aramid 1500D/1 + Polyamide 66 1260D/1 hybrid cord manufactured by a conventional manufacturing method.

Example 1 and Example 2 are hybrid cords of an embodiment of the present disclosure having two modulus transition points manufactured through a cabling and heat treatment process by the above-described method, and Example 1 sought weight reduction by lowering a linear density, and Example 2 was manufactured using identical yarns to Comparative Example 3.

An indoor driving test and an actual vehicle performance test were performed using a structure and physical properties of each cord, and a radial tire (225/45R17) manufactured by applying the cords to a cap ply, and uniformity, a dynamic profile, a rolling resistance, high-speed driving durability, steering stability, riding comfort, and noise characteristics were respectively measured by the following methods, and results are shown in Table 1 below:

### Performance Evaluation Methods

Uniformity is an index value synthesizing values including R1H and conicity measured through a uniformity measuring device, and based on Comparative Example 1, a higher value is more advantageous.

Rolling resistance was evaluated using an SAE J1269 method, expressed as an index based on an RRc value of Comparative Example 1 as 100, and an index value indicates being more advantageous for rolling resistance as being higher.

High-speed driving durability proceeds simulating a driving condition of a tire and increasing a speed in stages as a tire and a drum rotate in engagement as a tire is mounted on a drum-type driving durability tester and a drum is rotated, but proceeds increasing a speed by 20 km/h to 30 km/h in units of 10 minutes after a start of driving.

For dynamic profile, circumferential growth caused by centrifugal force was measured according to driving speed using dedicated testing equipment to measure and record a profile change for each position from a shoulder to a tread portion, and performance being more excellent as a profile change is smaller is determined.

In Table 1, Comparative Example 1 is represented by an index of 100, and a higher value than 100 indicates being more excellent than Comparative Example 1.

Steering stability, riding comfort, and noise performance are index evaluated indexes of values felt by a test driver through an actual vehicle driving of a vehicle equipped with a test tire, taking Comparative Example 1 as an index of 100, indicating being more excellent as being higher. An index standard being 100 or more indicates being more excellent than Comparative Example 1, and being 100 or less means being inferior to Comparative Example 1.

**Table 1**

| | Comparative Example 1 | Comparative Example 2 | Comparative Example 3 | Example 1 | Example 2 |
|---|---|---|---|---|---|
| Structure | Polyamide 66 840D/2 28EPI | Aramid 1500D/2 21EPI | Aramid 1500D/1 + Polyamide 66 1260D/128E PI | Aramid 1000D/2 + Polyamide 66 840D/ 128 EPI | Aramid 1500D/1 + Polyamide 66 1260D/1 28EPI |
| Hybrid cord twisting method | Direct cable corder | Ring Twister | Direct cable corder | Direct cable corder | Direct cable corder |
| S-twist TPM | S 470 | 340 | 340 | 370 | 340 |
| Z-twist TPM | Z 480 | Aramid 345 | Aramid 340 | Aramid 365 | Aramid 338 |
| | | Nylon66 290 | Nylon66 340 | Nylon 66 373 | Nylon 66 345 |
| Strain position of modulus transition point | - | 0.04 | 0.009 | 0.02 | 0.02 |
| Standard | 225/45R17 | | | | |
| Application part | Cap ply | | | | |
| Application method | 1Ply | | | | |
| Weight (kg) | 13.4 | 13.5 | 13.5 | 13.4 | 13. 5 |
| Uniformity | 100 | 95 | 96 | 100 | 101 |
| Dynamic profile | 100 | 95 | 93 | 94 | 93 |
| Rolling resistance | 100 | 102 | 103 | 98 | 99 |
| High-speed driving durability | 1:38 | 1:59 | 1:59 | 1:58 | 2: 03 |
| Steering stability | 100 | 110 | 111 | 115 | 119 |
| Riding comfort | 100 | 96 | 95 | 100 | 99 |
| Noise | 100 | 98 | 95 | 103 | 101 |

Referring to Table 1, in a case of Comparative Example 1 using polyamide 66, confirming noise and riding comfort being excellent, but high-speed driving durability and steering stability being inferior was confirmed, and in a case of Comparative Example 2 using an aramid cord manufactured using a ring twister, confirming high-speed driving durability and steering stability being favorable, but uniformity, noise, and riding comfort being disadvantageous was confirmed.

Furthermore, in a case of Comparative Example 3 using an aramid-polyamide 66 hybrid cord manufactured with a direct cabler matching the numbers of twists of Z-twists identically, overall favorable results were exhibited in noise, riding comfort, high-speed driving durability, steering stability, and dynamic profile, but a disadvantageous value is exhibited for rolling resistance, and due to a disadvantage of manufacturability, it was confirmed that the uniformity was disadvantageous.

In cases of Examples 1 and 2 using an aramid-polyamide 66 hybrid cord of a linear density applying new physical properties and manufacturing methods, values similar to or more excellent than Comparative Example 3 are exhibited in high-speed driving durability, steering stability, dynamic profile, and riding comfort, and uniformity exhibits more excellent values than Comparative Examples 1 to 3, and a deviation of tire characteristics also decreasing on a tire as a physical property deviation generally decreases was confirmed. Furthermore, in Example 1, confirming the most excellent rolling resistance characteristic being exhibited was confirmed.

The above description of the present disclosure is for illustrative purposes, and those skilled in the art to which the present disclosure pertains will understand modifications into other specific forms being easily possible without changing the technical spirit or essential features of the present disclosure. Therefore, the embodiments described above should be understood as illustrative in all respects and not restrictive. For example, each component described as a single type may be implemented in a distributed manner, and similarly, components described as distributed may be implemented in a combined form.

The scope of the present disclosure is indicated by the claims to be described later, and all changes or modified forms derived from the meaning and scope of the claims and their equivalent concepts should be interpreted as being included in the scope of the present disclosure.

### - Description of the symbols -

1: Tread portion, 2: Sidewall portion, 3: Bead portion, 4: Steel belt layer, 5: Belt layer

## Claims

1. A hybrid cord comprising a thermoplastic fiber disposed in a core and having a yarn strength of 5 g/d to 10 g/d and an elongation at break of 12% or more; and a high-strength fiber covering the thermoplastic fiber and having a yarn strength of 15 g/d or more and an elongation at break of less than 10%.

2. The hybrid cord of claim 1, wherein the high-strength fiber comprises at least one of PPTA, a wholly aromatic polyester, and PPTA/DPE.

3. The hybrid cord of claim 1, wherein the thermoplastic fiber comprises at least one of polyamide and polyester.

4. The hybrid cord of claim 1, wherein a density ratio of the thermoplastic fiber to the high-strength fiber is 1: 0.78 to 1: 0.96.

5. The hybrid cord of claim 1, wherein a draw ratio of the thermoplastic fiber is 5.4 to 5.8.

6. The hybrid cord of any one of claims 1 to 5, wherein the hybrid cord has a strength of 11 g/d or more, an S-twist having 250 to 500 TPM, and a twist multiplier α*_{d}* of 140 to 210 represented by Equation 2: ${α}_{d} = \frac{T}{100} \sqrt{{ρ}_{d}}$ Equation 2 wherein the symbol α*_{d}* is a denier-based twist multiplier, T is TPM, and the other symbol ρ*_{d}* is a linear density of the hybrid cord in units of denier.

7. The hybrid cord of any one of claims 1 to 5, wherein a modulus transition point exists at a strain of 0.01 to 0.03, a modulus in a region before the modulus transition point is 30 to 70 g/d, and a modulus in a region after the modulus transition point reaches a saturation region at a level of 150 to 250 g/d.

8. A pneumatic radial tire comprising the hybrid cord of claim 1.

9. A method for manufacturing the hybrid cord of claim 1, the method comprising: preparing the high-strength fiber and the thermoplastic fiber; manufacturing a greige cord by cabling the high-strength fiber and the thermoplastic fiber with a direct cabler; and manufacturing a dip cord by heat-treating the greige cord.

10. The method of claim 9, wherein, in manufacturing the greige cord, the high-strength fiber is input at an input length of 0.99 to 1.015 relative to the thermoplastic fiber.

11. The method of claim 9, wherein, in manufacturing the greige cord, the high-strength fiber is disposed on a pot yarn of the direct cabler, and the thermoplastic fiber is disposed on a creel yarn of the direct cabler.

12. The method of claim 9, wherein a thermal shrinkage rate of the greige cord is 2.5 to 6%.

13. The method of claim 9, wherein manufacturing the dip cord by heat-treating the greige cord is performed such that the dip cord shrinks by 0.5 to 3% compared to the greige cord.
